# EUROPEAN PATENT SPECIFICATION

(11) **EP 2 869 021 B1**
(45) Date of publication and mention of the grant of the patent: **02.10.2019**
(21) Application number: 14190158.7
(22) Date of filing: 23.10.2014
(51) Int. Cl.: G06K 9/20, G08G 1/16

(54) **Multiple imager vehicle optical sensor system**
Optisches Fahrzeugsensorsystem mit mehreren Bildgebern
Système de capteur optique de véhicule avec imageurs multiples

(30) Priority: 05.11.2013 US 201314071703
(43) Date of publication of application: 06.05.2015
(73) Proprietor: Aptiv Technologies Limited, St. Michael (BB)
(72) Inventor: Loong, Daniel Leong Woon, 82202 Singapore (SG); Yeo, Kok Wee, 530430 Singapore (SG); Low, Yew Kwang, 738082 Singapore (SG); Taylor, Ronald M., Greentown, IN 46936 (US)
(74) Representative: Manitz Finsterwald Patent- und Rechtsanwaltspartnerschaft mbB

(56) References cited:
- EP-A2- 1 580 092
- EP-A2- 2 270 391
- DE-A1- 3 005 415
- DE-A1-102005 048 685
- DE-T2- 69 711 725
- US-A1- 2009 323 186

## Description

### TECHNICAL FIELD OF INVENTION

The invention generally relates to a vehicle optical sensor system, and more particularly relates to an optical sensor system with multiple optoelectronic devices receiving images through a common or master lens.

### BACKGROUND OF INVENTION

Optical sensor systems are frequently used in automobiles and other vehicles to provide images of areas around or about the vehicle. In some instances, these images are used by various vehicle warning and control systems. In the example of forward looking optical sensor systems, the images provided by the sensor may be used as inputs for collision avoidance, lane departure detection, forward collision warning, side warning, adaptive cruise control, night vision, headlight control, rain sensing systems and others. A forward looking optical sensor system may be located behind the windshield near the rear view mirror to obtain a view of the road ahead which is similar to the driver's view. Optical sensor systems may also be used to view the area behind a vehicle for backing up, trailer towing, rearward collision warning, and rear blind zone warning systems. Additionally, optical sensor systems may be used to determine occupant position for restraint systems, rear seat occupant monitoring, or security and intrusion detection systems.

The cost of individual sensor systems for each of these vehicle warning or control systems, plus the challenges of efficiently packaging multiple optical sensor systems in a vehicle make it desirable to use an integrated sensor system to provide images to multiple vehicle warning and control systems. Unfortunately, performance tradeoffs exist when using a single optoelectronic device based system due to light sensitivity, spectrum sensitivity, and field of view requirements specific to each vehicle warning and control system. These performance tradeoffs have previously precluded optimum performance for every vehicle warning and control system.

For example, a night vision system may require an optical sensor system with high light sensitivity because of the need to sense contrast of objects at long ranges with very little active illumination. In contrast, a lane departure system may accommodate an optical sensor system with lower light sensitivity because daylight or headlights (at closer ranges) provide sufficient lighting.

Light sensitivity is primarily determined by the pixel size of the optoelectronic device used in the optical sensor system to convert light to an electrical signal; a larger pixel has more area available for photons to strike the pixel and be absorbed. As used herein, an optoelectronic device is a component of an optical sensor system that may be operable to generate a video signal. However, a larger pixel size requires a larger optoelectronic device for equivalent pixel resolution. Light sensitivity for a given pixel size may be increased by increasing the exposure time. However, longer exposure time will decrease the frame rate of the images. Additionally, light sensitivity can be increased by using a larger aperture lens to allow more light to fall on the pixels of the sensor. However, a larger aperture usually requires a larger lens, which increases the packaging size of the optical sensor system.

Different vehicle warning and control systems may also require an optical sensor system with different spectrum sensitivity. For example a tail light detection system may require sensitivity to red light, a lane departure detection system may require sensitivity to yellow light, and a night vision system may require sensitivity to infrared light. There are performance tradeoffs that may be required if a single optoelectronic device based system is used with all three of these vehicle warning and control systems.

Different vehicle warning and control systems may also require an optical sensor system with a different field of view. For example, a rain detection system may need a wide field of view while an adaptive cruise control system may need a narrower field of view. Again, using a single optoelectronic device based system may require performance tradeoffs.. Document EP 1 580 092 A2 discloses a camera in a motor vehcle comprising at least one image sensor that detects a first optical radiation and a second optical radiation. Document DE 30 05 415 A1 discloses a monitor system for vehicle rear field of view uses optical or electro-optical devices to give large field of view. Document US 2009/323186 A1 discloses a wide angle viewing apparatus for security applications. Document DE 697 11 725 T2 discloses an image recognition system for detecting liquid drops such as rain water drops deposited on a transparent member such as a windshield of a vehicle. Document EP 2 270 391 A2 discloses an installation method of the illumination of buildings or other objects, including surfaces to be illuminated, for example parks. Document DE 10 2005 048685 A1 discloses a measuring device and a method for measuring and characterizing the optical far field of a light source, and the use of the measuring system for measuring and characterizing the far field of airport beacons, in particular airport operator and elevated lights.

### SUMMARY OF THE INVENTION

In accordance with one embodiment, which is defined in the independent claim 1, an optical sensor system adapted for use on a vehicle is provided. The system includes a master lens, an optical diffuser, and a plurality of optoelectronic devices. The master lens is positioned on the vehicle to observe a field of view about the vehicle. The master lens is characterized as defining a focal plane. The optical diffuser is located proximate to the focal plane of the master lens. The diffuser is configured to display an image of the field of view from the master lens. The plurality of optoelectronic devices is configured to view the diffuser. The plurality of optoelectronic devices includes a first optoelectronic device operable to generate a first video signal indicative of images on a first portion of the diffuser, and a second optoelectronic device operable to generate a second video signal indicative of images on a second portion of the diffuser.

According to the invention, the first optoelectronic device is configured to be sensitive to a first light wavelength range and the second optoelectronic device is configured to be sensitive to a second light wavelength range distinct from the first light wavelength range. The first light wavelength range may correspond to a visible light wavelength range and the second light wavelength range may correspond to an infrared light wavelength range. The first optoelectronic device may comprise an optoelectronic die. The first video signal may be processed independent of the second video signal. The system may further comprise an optical filter interposed between the first optoelectronic device and the diffuser. The system may further comprise an image projection layer (IPL) interposed between the diffuser and the plurality of optoelectronic devices , the IPL configured to preferentially direct light from the diffuser toward the plurality of optoelectronic devices. The IPL may include a lenticular array. The IPLmay include an electrowetting lens operable to direct light from the diffuser toward each of the plurality of optoelectronic devices. The IPL may include a free-form optical device that defines an array of lens elements, wherein each of the lens elements may be configured to preferentially direct light from the diffuser toward each one of the plurality of optoelectronic devices. The system may include an angle correction lens interposed between the first optoelectronic device and the diffuser, said angle correction lens configured to correct for an angle of view of the first optoelectronic device relative to the diffuser. The second optoelectronic device has a lower resolution than the first optoelectronic device such that the second video signal has a faster response time than the first video signal. The first optoelectronic device may be configured to be sensitive to a first light wavelength range and the second optoelectronic device may be configured to be sensitive to a second light wavelength range distinct from the first light wavelength range. The first optoelectronic device may be configured to be sensitive to a first light wavelength range and the second optoelectronic device may be configured to be sensitive to a second light wavelength range distinct from the first light wavelength range, wherein the system may include a third optoelectronic device operable to generate a third video signal indicative of images on a third portion of the diffuser, wherein the third optoelectronic device has a lower resolution than the first optoelectronic device such that the third video signal has a faster response time than the first video signal.

Further features and advantages will appear more clearly on a reading of the following detailed description of the preferred embodiment, which is given by way of non-limiting examples and with reference to the accompanying drawings.

### BRIEF DESCRIPTION OF DRAWINGS

The present invention will now be described, by way of example with reference to the accompanying drawings, in which:
Fig. 1 is a side view diagram of an optical sensor system with multiple imagers in accordance with one embodiment;
Fig. 2 is a side view diagram of details of the system of Fig. 1 in accordance with one embodiment;
Figs. 3A, 3B, and 3C in combination are a side view diagram of details of the system of Fig. 1 in accordance with one embodiment;
Figs. 4A and 4B are a side view and front view diagrams, respectively, of details of the system of Fig. 1 in accordance with one embodiment; and
Fig. 5 is a diagram of details of the system of Fig. 1 in accordance with one embodiment.

### DETAILED DESCRIPTION

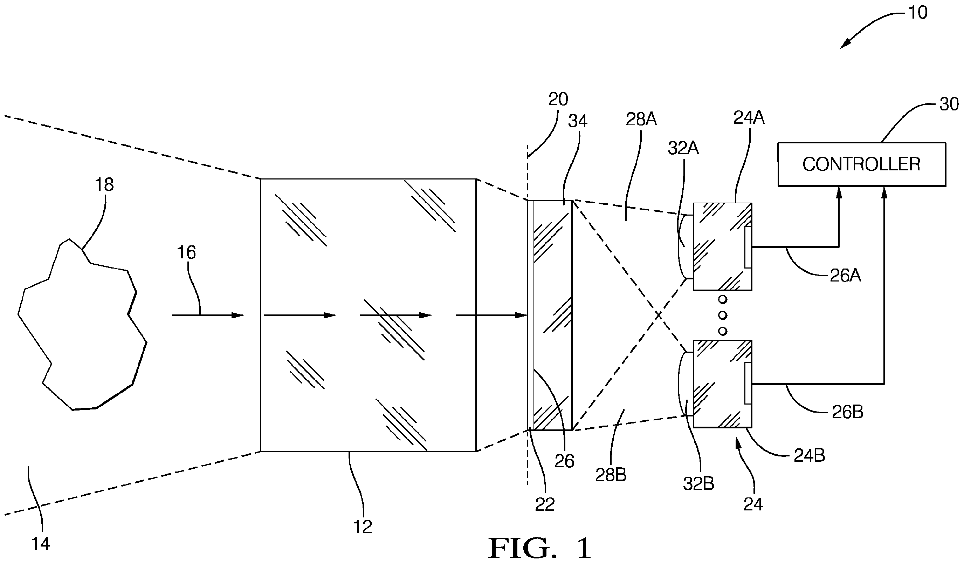

Fig. 1 illustrates a non-limiting example of an optical sensor system, hereafter referred to as the system 10. In general, the system 10 is adapted for use on a vehicle (not shown). However, it is contemplated that the system 10 described herein will be useful for non-vehicle applications such as building security systems.

The system includes a master lens 12 positioned, for example, on the vehicle to observe a field of view 14 about the vehicle. The field of view 14 may be directed forward of the vehicle for detecting objects in or near the travel path of the vehicle, or may also be directed toward an area beside the vehicle to detect objects other vehicles in adjacent lanes that may occupy the so-called 'blind spot' of a vehicle operator. Alternately, the field of view 14 may be directed behind the vehicle to detect, for example, objects behind the vehicle while backing up or monitoring a trailer while towing. The field of view 14 may also include an area of the interior of the vehicle to detect whether occupants are in a proper seating position for controlling activation of a supplemental restraint system, such as an air bag, or to monitor passengers in the rear seat of the vehicle.

The master lens 12 may be as simple as a single bi-convex lens element, or may be a sophisticated combination of lenses and/or mirrors configured to gather light from the field of view 14. By way of further example, the master lens 12 may be configured to provide 'birds-eye' or panoramic view of the entire area surrounding the vehicle. In general, the master lens 12 is configured to focus an image 16 of an object 18 in the field of view 14 onto a focal plane 20. In other words, the master lens 12 may be characterized as defining the focal plane 20. It is understood that the focal plane 20 may not be a flat plane as illustrated, but is typically a curved surface. The focal plane 20 is illustrated herein as being flat only to simplify the drawing.

The system 10 may include an optical diffuser 22 located at or proximate to the focal plane 20 of the master lens 12. In general, the diffuser 22 is configured to display the image 16 of the object 18 in the field of view 14 that comes from the master lens 12 so a plurality of optoelectronic devices 24 can each be arranged to view all or part of a viewing area 26 defined by the diffuser 22. In one embodiment, the diffuser 22 is translucent and may be comparable to a sheet of frosted glass. As such, an image (pre-image) is focused by the master lens 12 on the diffuser 22 so the pre-image can be 'seen' by the plurality of optoelectronic devices 24. For example, if a person looked at the diffuser 22 from the same side of the diffuser 22 as illustrated for the plurality of optoelectronic devices 24, the person would be able to see an image on the diffuser 22. In other words, the image 16 is not projected onto the plurality of optoelectronic devices 24 in the same way as would be the case if the master lens 12 were focusing the image directly into the plurality of optoelectronic devices 24 (i.e. no diffuser). The diffuser is sometimes called an optical diffuser, and suitable optical diffusers are available from Edmund Optics Inc. of Barrington, New Jersey, USA. In an alternative embodiment not shown, the diffuser 22 may be optically opaque and comparable to a projection screen (e.g. a wall). The master lens focuses the image on the projection screen, and the plurality of optoelectronic devices 24 could be arranged to see what is on the projection screen from the same side of the diffuser 22 as the master lens 12. It is appreciated that the frosted glass type optical diffuser can be viewed from either side.

Arranging the plurality of optoelectronic devices 24 to view the diffuser 22 is advantageous as each of the plurality of optoelectronic devices 24 can view all of the diffuser 22, or the same portion or overlapping portions of the diffuser 22. As such, the system 10 can use the same master lens 12 to provide images to the plurality of optoelectronic devices 24, and thereby avoid the undesirable additional expense of providing separate lens assemblies for each of the plurality of optoelectronic devices 24 as lens assemblies tend to one of the more expensive parts of an optical system. While the illustrations described herein may suggest that the plurality of optoelectronic devices 24 are arranged in a line, it is contemplated that the plurality of optoelectronic devices 24 could be a two-dimensional (2-D) array of the devices. Furthermore, is it not a requirement that each of the devices in the plurality of optoelectronic devices 24 be arranged co-planar. That is, each of the plurality of optoelectronic devices 24 could be a different distance from the diffuser 22.

Continuing to refer to Fig. 1, the plurality of optoelectronic devices 24 may include a first optoelectronic device 24A operable to generate a first video signal 26A indicative of images on a first portion 28A of the diffuser 22, and a second optoelectronic device 24B operable to generate a second video 26B signal indicative of images on a second portion 28B of the diffuser 22. As suggested above, and by way of further non-limiting examples, the first portion 28A and the second portion 28B may both be the entirety of viewing area 26, or overlapping portions each less than the entirety of the viewing area 26, or distinct non-overlapping portions, or one may be a sub-portion of the other.

A further advantage of this combination of the plurality of optoelectronic devices 24 viewing images from a single or common lens (i.e. the master lens 12) is that the performance characteristics of each of the plurality of optoelectronic devices 24 can be optimally selected for the portion (e.g. the first portion 28A and the second portion 28B) based on what information is desired from the portion being viewed. For example, the first optoelectronic device 24A may be configured to be sensitive to a first light wavelength range (e.g. visible spectrum) and the second optoelectronic device 24B may be configured to be sensitive to a second light wavelength range (e.g. infrared). In this example, the second optoelectronic device 24B is sensitive to a second wavelength range that is distinct from the first light wavelength range of the first optoelectronic device 24A. As used herein, having sensitivities to distinct light wavelength ranges generally means that each of the plurality of optoelectronic devices 24 has different sensitivities to particular colors of light. While each of the plurality of optoelectronic devices 24 may use a similar type of technology such CCD or CMOS type image sensors, each of the plurality of optoelectronic devices 24 may be adapted to be sensitive to a particular color of light by equipping a particular optoelectronic device with an optical filter. Accordingly, the system 10 described herein is distinguished from optical systems that have multiple image sensors with essentially the same light wavelength sensitivities.

Developments in complementary metal oxide semiconductor optoelectronic device manufacturing technology have led to the creation of optoelectronic devices that offer significant size and cost advantages over optoelectronic devices used previously with automotive optical sensor systems. This manufacturing technology allows an optoelectronic device to be made at the semiconductor wafer die level, herein referred to as optoelectric dies. These optoelectronic dies are commonly used in wafer level cameras. Wafer level cameras are approximately one third the size of optical sensors used previously in automotive applications.

Because a wafer level camera enjoys a significant cost advantage compared to a single traditional optical sensor, it may be desirable to use wafer level cameras to provide video signals (e.g. the first video signal 26A and the second video signal 26B) for optical based vehicle warning and control systems. By doing so, each wafer level camera could be optimized to the requirements of the various vehicle warning and control systems.

However, when adapting wafer level cameras to automotive applications was first considered, a disadvantage regarding light sensitivity was identified. The optoelectric dies used in wafer level camera have smaller pixels (typically less than 2 microns in diameter) when compared to pixels in optical sensors commonly used for automotive applications (typically about 6 microns in diameter). Additionally, the lens of the wafer level camera has a smaller aperture (typically f 2.8 or higher) when compared to optical sensors commonly used for automotive applications. The smaller aperture reduces the efficiency of the wafer level camera lens because the smaller aperture reduces the amount of light that can be focused onto the pixels. The combination of the smaller pixel size and a less efficient lens results in a wafer level camera having an inherent light sensitivity that is typically an order of magnitude less than what may be needed for many automotive optical sensors.

An optical sensor system with a single higher efficiency lens (e.g. the master lens 12) and several optoelectronic devices or optoelectronic dies (e.g. the plurality of optoelectronic devices 24) may be used to replace several stand-alone optical sensors. The higher efficiency lens can optimize the light gathering ability and focus light onto the diffuser 22. The higher efficiency lens is able to gather light for all of the optoelectronic devices at a higher efficiency than individual wafer level camera lenses. The higher efficiency lens could advantageously be of a broadband spectral design that would allow multiple wavelength spectra to be detected, e.g. visible through near-infrared wavelengths (wavelengths of approximately 380 to 1000 nanometers). The cost savings from using optoelectronic dies may offset the additional cost of the higher efficiency lens.

Since the plurality of optoelectronic devices are each capable of independently generating a video signal, performance characteristics of each optoelectronic device may be optimized for multiple automotive warning and control functions by incorporating individual optical elements and unique signal processing. Thus, the system 10 can provide a plurality of video signals tailored to multiple vehicle warning and control systems.

The system 10 may include a controller 30 configured to receive video signals (e.g. the first video signal 26A and the second video signal 26B) from the plurality of optoelectronic devices 24. The controller 30 may include a processor (not shown) such as a microprocessor or other control circuitry such as analog and/or digital control circuitry including an application specific integrated circuit (ASIC) for processing data as should be evident to those in the art. The controller 30 may include memory, including non-volatile memory, such as electrically erasable programmable read-only memory (EEPROM) for storing one or more routines, thresholds and captured data. The one or more routines may be executed by the processor to perform steps for processing the video signals received by the controller 30 as described herein.

In one embodiment, the first video signal is processed 26A independent of the second video signal 26B. As used herein, independent processing means that the video signals are not combined to form some composite image, but are utilized independent of each other for different purposes. For example, if the first optoelectronic device 24A is configured to be sensitive to visible light and the first portion 28A corresponds to the blind-spot beside the vehicle, the controller 30 may only use the first video signal 26A to control the activation of an indicator (not shown, e.g. indicator light and/or audible alarm) to indicate that there is another vehicle in the blind-spot. By comparison, if the second optoelectronic device 24B is configured to be sensitive to infrared light and the second portion 28B corresponds to an area forward of the vehicle, the second video signal 26B may only be used to provides a signal to a heads-up display to overlay an infrared image in line with the vehicle operator's forward view forward of the vehicle. It should be evident that in this instance the first video signal 26A can be processed independently from the second video signal 26B, even if both are processed by the controller 30, i.e. the same controller. By this example, it is evident that multiple safety systems (e.g. blind-spot detection and forward view infrared) can be provided by a single optical sensor system (the system 10) using the master lens 12, i.e. the same lens assembly.

In the example above, the imagers in the first optoelectronic device 24A and the second optoelectronic device 24B may be essentially the same technology, e.g. either CCD or CMOS type imagers. In order for the first optoelectronic device 24A and the second optoelectronic device 24B to have distinct light wavelength ranges or distinct light wavelength sensitivities, either or both may be equipped with a first optical filter 32A interposed between the first optoelectronic device 24A and the diffuser 22, and/or with a second optical filter 32B interposed between the second optoelectronic device 24B and the diffuser 22. In accordance with the example given above, the first optical filter 32A may be, for example, a yellow lens selected to filter out blue light in order to improve image contrast from the area beside the vehicle, and the second optical filter 32B may block all or part of the visible light spectrum so that the second optoelectronic device 24B is more sensitive to infrared light, e.g. a red lens. Alternatively, the first optoelectronic device 24A and the second optoelectronic device 24B may have distinct imagers selected for their particular spectrum sensitivities.

In general, optical diffusers (the diffuser 22) typically scatter light from the master lens 12 over a wide area without a directional preference. I.e. the diffuser 22 may exhibit an omnidirectional light scatter characteristic. Some available optical diffusers may exhibit some preferential directivity. That is, they may direct more light in a direction normal to the diffuser 22 or the focal plane 20 as compared to other directions. In order to increase the brightness of the image 16 as seen or received by the plurality of optoelectronic devices 24, the system may include an image projection layer 34, hereafter referred to as the IPL 34. In general, the IPL is interposed between the diffuser 22 and the plurality of optoelectronic devices 24, and is generally configured to preferentially direct light from the diffuser 22 toward the plurality of optoelectronic devices 24.

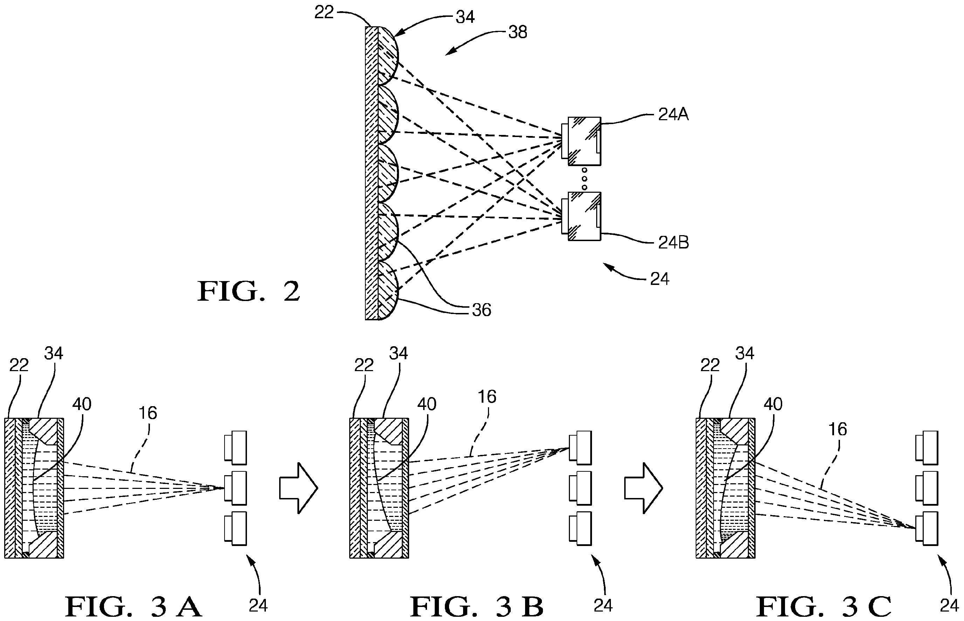

Fig. 2 illustrates a non-limiting example of the IPL 34 in the form of an array of lenticular lenses 36, designated herein as a lenticular array 38. The master lens 12 and the controller 30 are omitted from this and some subsequent drawings only to simplify the illustration. As will be recognized by those in the art, the lenticular array 38 may be a one-dimensional (1D) array of parallel radiused ridges, or may be a two-dimensional (2D) array of spherical, circular, or aspheric lens elements. Lenticular lenses are readily available, and the design rules to optimize the lenticular array 38 for the system 10 described herein are well-known.

Figs. 3A, 3B, and 3C illustrates a non-limiting example of the IPL 34 in the form of an electrowetting lens 40 operable to direct light from the diffuser toward each of the plurality of optoelectronic devices. Figs. 3A, 3B, and 3C show a progression of electrowetting lens shapes achieved by applying the proper bias voltage to the electrowetting lens 40 to preferentially direct the image on the diffuser 22 toward one or more of the plurality of optoelectronic devices 24. By multiplexing the image 16, the brightness to each of the plurality of optoelectronic devices 24 can be maximized. A description of operating an electrowetting lens to direct light can be found in United States Patent Number 7,339,575 issued March 4, 2008, and Number 8,408,765 issued April 12, 2013. While not specifically shown, it is contemplated that the electrowetting lens 40 may be operated by the controller 30.

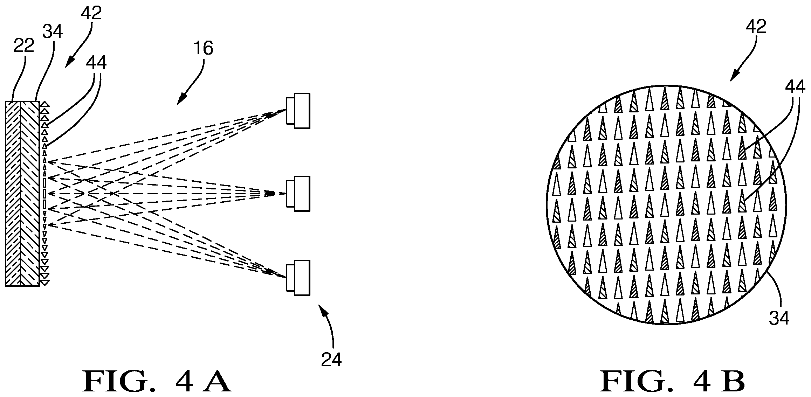

Figs. 4A and 4B illustrate a non-limiting example of a side and front view, respectively, of the IPL 34 in the form of a free-form optical device 42, also sometimes known as a free-form optics array or a micro-optical lens array. In general, the free-form optical device defines an array of lens elements 44, where each of the lens elements 44 is configured to preferentially direct light from the diffuser 22 toward each one of the plurality of optoelectronic devices 24. An advantage of the free-form optical device 42 is that the light of the image 16 is more specifically directed toward each of the plurality of optoelectronic devices 24 and so the image 16 is expected to be brighter than with the lenticular array 38 shown in Fig. 2. Furthermore, the free-form optical device 42 does not need to be operated as is the case for the electrowetting lens 40. As will be recognized by those in the art, a free-form optical device may consist of a one-dimensional (1D) array of parallel or planar refraction elements, or may be a two-dimensional (2D) array of spherical, or circular or aspheric lens elements or a combination of 1D and 2D elements as in a diffractive grating.

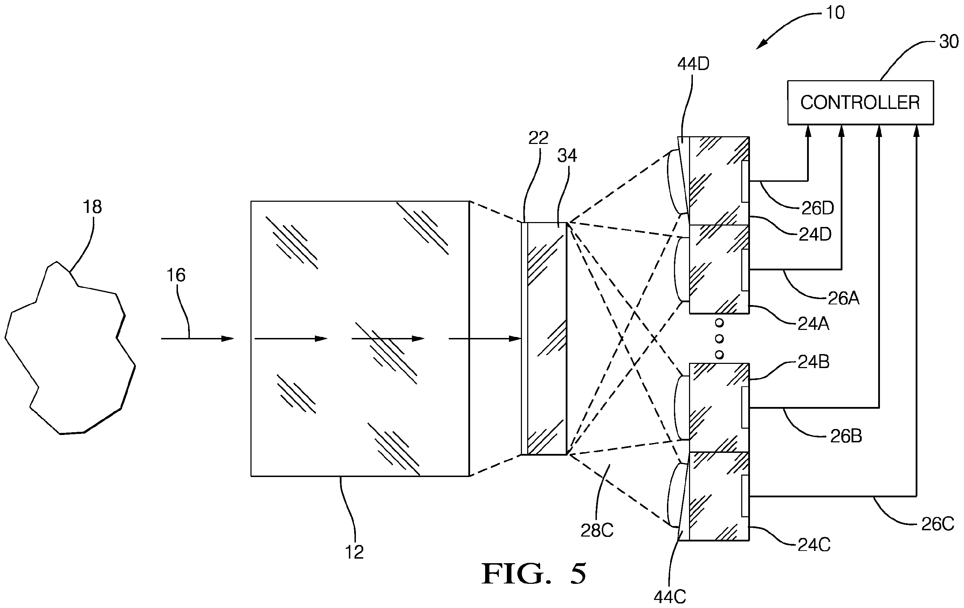

Fig. 5 illustrates another non-limiting example of the system 10. As the number of the plurality of optoelectronic devices 24 increases, the angle relative to normal of the focal plane 20 from which the diffuser 22 or the IPL 34 is viewed increases, and the effects of parallax become apparent. In order to correct for this effect, the system 10 may include an angle correction lens 44C or 44D interposed between any of the plurality of optoelectronic devices 24 (e.g. - angle correction lens 44C for the third optoelectronic device 24C or angle correction lens 44D for the fourth optoelectronic device 24D) and the diffuser 22. As used herein, the angle correction lens is configured to correct for an angle of view of the first, second, third, fourth, or any optoelectronic device, relative to the diffuser 22.

In general, the resolution of an image and the speed of an image are often considered to be design trade-offs if cost is relatively fixed. It may be desirable for one or more of the plurality of optoelectronic devices 24 to have a faster response time than the others so fast moving objects are more quickly detected, even though faster detection may sacrifice or reduce the resolution of the image 16 of the object 18. As such, it may be advantageous if the second optoelectronic device 24B is has a lower resolution than the first optoelectronic device 24A such that the second video signal 26B has a faster response time than the first video signal 26A. Alternatively, if it is preferred to keep the resolutions of the images for the first optoelectronic device 24A and the second optoelectronic devices 24B relatively high, the system 10 may include a third optoelectronic device 24C operable to generate a third video signal 26C indicative of images on a third portion 28C of the diffuser 22, where the third optoelectronic device 24C is has a lower resolution than the first optoelectronic device 24A such that the third video signal 26C has a faster response time than the first video signal 26A.

Accordingly, an optical sensor system (the system 10), a controller 30 for the system 10 are provided. The system 10 advantageously includes a diffuser 22 so the plurality of optoelectronic devices 24 can view overlapping or the same portions of the image 16 present on the viewing area 26 of the diffuser 22. As such, the system 10 is able to provide multi-spectral sensing for less cost as the system 10 uses the same lens (the master lens 12) to capture the image 16 of the object 18.

While this invention has been described in terms of the preferred embodiments thereof, it is not intended to be so limited, but rather only to the extent set forth in the claims that follow.

## Claims

1. An optical sensor system (10) adaptable for use on a vehicle, said system (10) comprising:
a master lens (12) positionable on the vehicle to observe a field of view (14) about the vehicle, said master lens (12) characterized as defining a focal plane (20);
an optical diffuser (22) located proximate to the focal plane (20) of the master lens (12), said diffuser (22) configured to display an image (16) of the field of view (14) from the master lens (12);
**characterized in that** the system further comprises
a plurality of optoelectronic devices (24) configured to view (14) the diffuser (22), wherein said plurality of optoelectronic devices (24) includes a first optoelectronic device (24A) configured to generate a first video signal (26A) indicative of images on a first portion (28A) of the diffuser (22), and a second optoelectronic device (24B) configured to generate a second video signal (26B) indicative of images on a second portion (28B) of the diffuser (22), each optoelectronic device (24A, 24B) comprising an image sensor;
wherein the first optoelectronic device (24A) is configured to be sensitive to a first light wavelength range and the second optoelectronic device (24B) is configured to be sensitive to a second light wavelength range distinct from the first light wavelength range.

2. The system (10) of claim 1, wherein the first light wavelength range corresponds to a visible light wavelength range and the second light wavelength range corresponds to an infrared light wavelength range.

3. System (10) according to any one of the preceding claims, wherein the first optoelectronic device (24A) comprises an optoelectronic die.

4. System (10) according to any one of the preceding claims, wherein the first video signal (26A) is processed independent of the second video signal (26B).

5. System (10) according to any one of the preceding claims, wherein the system (10) further comprises an optical filter interposed between the first optoelectronic device (24A) and the diffuser (22).

6. System (10) according to any one of the preceding claims, wherein the system (10) further comprises
an image projection layer (34) (IPL (34)) interposed between the diffuser (22) and the plurality of optoelectronic devices (24), said IPL (34) configured to preferentially direct light from the diffuser (22) toward the plurality of optoelectronic devices (24).

7. System (10) of claim 6, wherein the IPL (34) includes a lenticular array (38).

8. System (10) according to any one of claims 6 to 7, wherein the IPL (34) includes an electrowetting lens (40) operable to direct light from the diffuser (22) toward each of the plurality of optoelectronic devices (24).

9. System (10) according to any one of claims 6 to 8, wherein the IPL (34) includes a free-form optical device (42) that defines an array of lens elements (44), wherein each of the lens elements (44) is configured to preferentially direct light from the diffuser (22) toward each one of the plurality of optoelectronic devices (24).

10. System (10) according to any one of the preceding claims, wherein the system (10) includes an angle correction lens (44C) interposed between the first optoelectronic device (24A) and the diffuser (22), said angle correction lens (44C) configured to correct for an angle of view (14) of the first optoelectronic device (24A) relative to the diffuser (22).

11. System (10) according to any one of the preceding claims, wherein the second optoelectronic device (24B) has a lower resolution than the first optoelectronic device (24A) such that the second video signal (26B) has a faster response time than the first video signal (26A).

12. System (10) of claim 11, wherein the first optoelectronic device (24A) is configured to be sensitive to a first light wavelength range and the second optoelectronic device (24B) is configured to be sensitive to a second light wavelength range distinct from the first light wavelength range.

13. System (10) according to any one of the preceding claims, wherein the first optoelectronic device (24A) is configured to be sensitive to a first light wavelength range and the second optoelectronic device (24B) is configured to be sensitive to a second light wavelength range distinct from the first light wavelength range, wherein the system (10) includes
a third optoelectronic device (24C) operable to generate a third video signal (26C) indicative of images on a third portion (28C) of the diffuser (22), wherein the third optoelectronic device (24C) has a lower resolution than the first optoelectronic device (24A) such that the third video signal (26C) has a faster response time than the first video signal (26A).

## Patentansprüche

1. System (10) mit optischen Sensoren, das zur Verwendung an einem Fahrzeug angepasst werden kann, wobei das System (10) umfasst:
eine Hauptlinse (12), die an dem Fahrzeug positionierbar ist, um ein Blickfeld (14) um das Fahrzeug herum zu beobachten, wobei sich die Hauptlinse (12) durch Definieren einer Brennebene (20) auszeichnet;
eine optische Streuvorrichtung (22), die sich nahe bei der Brennebene (20) der Hauptlinse (12) befindet, wobei die Streuvorrichtung (22) ausgestaltet ist, um ein Bild (16) des Blickfelds (14) von der Hauptlinse (12) anzuzeigen;
**dadurch gekennzeichnet, dass** das System ferner umfasst
eine Vielzahl optoelektronischer Vorrichtungen (24), die ausgestaltet sind, um die Streuvorrichtung (22) zu betrachten (14), wobei die Vielzahl optoelektronischer Vorrichtungen (24) eine erste optoelektronische Vorrichtung (24A), die ausgestaltet ist, um ein erstes Videosignal (26A) zu erzeugen, das Bilder an einem ersten Abschnitt (28A) der Streuvorrichtung (22) anzeigt, und eine zweite optoelektronische Vorrichtung (24B) beinhaltet, die ausgestaltet ist, um ein zweites Videosignal (26B) zu erzeugen, das Bilder an einem zweiten Abschnitt (28B) der Streuvorrichtung (22) anzeigt, wobei jede optoelektronische Vorrichtung (24A, 24B) einen Bildsensor umfasst;
wobei die erste optoelektronische Vorrichtung (24A) so ausgestaltet ist, dass sie auf einen ersten Lichtwellenlängenbereich empfindlich ist, und die zweite optoelektronische Vorrichtung (24B) so ausgestaltet ist, dass sie auf einen zweiten Lichtwellenlängenbereich empfindlich ist, der sich von dem ersten Lichtwellenlängenbereich unterscheidet.

2. System (10) nach Anspruch 1, wobei der erste Lichtwellenlängenbereich einem Wellenlängenbereich des sichtbaren Lichts entspricht und der zweite Lichtwellenlängenbereich einem Infrarot-Lichtwellenlängenbereich entspricht.

3. System (10) nach einem der vorstehenden Ansprüche, wobei die erste optoelektronische Vorrichtung (24A) ein optoelektronisches Die umfasst.

4. System (10) nach einem der vorstehenden Ansprüche, wobei das erste Videosignal (26A) unabhängig von dem zweiten Videosignal (26B) verarbeitet wird.

5. System (10) nach einem der vorstehenden Ansprüche, wobei das System (10) ferner ein optisches Filter umfasst, das zwischen der ersten optoelektronischen Vorrichtung (24A) und der Streuvorrichtung (22) angeordnet ist.

6. System (10) nach einem der vorstehenden Ansprüche, wobei das System (10) ferner umfasst
eine Bildprojektionsschicht (34) (IPL (34)), die zwischen der Streuvorrichtung (22) und der Vielzahl optoelektronischer Vorrichtungen (24) angeordnet ist, wobei die IPL (34) ausgestaltet ist, um vorzugsweise Licht von der Streuvorrichtung (22) zu der Vielzahl optoelektronischer Vorrichtungen (24) zu lenken.

7. System (10) nach Anspruch 6, wobei die IPL (34) ein linsenförmiges Feld (38) beinhaltet.

8. System (10) nach einem der Ansprüche 6 bis 7, wobei die IPL (34) eine Linse (40) mit Elektrobenetzung beinhaltet, die betrieben werden kann, um Licht von der Streuvorrichtung (22) zu jeder der Vielzahl optoelektronischer Vorrichtungen (24) zu lenken.

9. System (10) nach einem der Ansprüche 6 bis 8, wobei die IPL (34) eine optische Freiformvorrichtung (42) beinhaltet, die ein Feld von Linsenelementen (44) definiert, wobei jedes der Linsenelemente (44) ausgestaltet ist, um vorzugsweise Licht von der Streuvorrichtung (22) zu jeder der Vielzahl optoelektronischer Vorrichtungen (24) zu lenken.

10. System (10) nach einem der vorstehenden Ansprüche, wobei das System (10) eine Winkelkorrekturlinse (44C) beinhaltet, die zwischen der ersten optoelektronischen Vorrichtung (24A) und der Streuvorrichtung (22) angeordnet ist, wobei die Winkelkorrekturlinse (44C) ausgestaltet ist, um einen Blickwinkel (14) der ersten optoelektronischen Vorrichtung (24A) relativ zu der Streuvorrichtung (22) zu korrigieren.

11. System (10) nach einem der vorstehenden Ansprüche, wobei die zweite optoelektronische Vorrichtung (24B) eine geringere Auflösung als die erste optoelektronische Vorrichtung (24A) aufweist, sodass das zweite Videosignal (26B) eine schnellere Reaktionszeit als das erste Videosignal (26A) aufweist.

12. System (10) nach Anspruch 11, wobei die erste optoelektronische Vorrichtung (24A) so ausgestaltet ist, dass sie auf einen ersten Lichtwellenlängenbereich empfindlich ist und die zweite optoelektronische Vorrichtung (24B) so ausgestaltet ist, dass sie auf einen zweiten Lichtwellenlängenbereich empfindlich ist, der sich von dem ersten Lichtwellenlängenbereich unterscheidet.

13. System (10) nach einem der vorstehenden Ansprüche, wobei die erste optoelektronische Vorrichtung (24A) so ausgestaltet ist, dass sie auf einen ersten Lichtwellenlängenbereich empfindlich ist, und die zweite optoelektronische Vorrichtung (24B) so ausgestaltet ist, dass sie auf einen zweiten Lichtwellenlängenbereich empfindlich ist, der sich von dem ersten Lichtwellenlängenbereich unterscheidet,
wobei das System (10) eine dritte optoelektronische Vorrichtung (24C) beinhaltet, die betrieben werden kann, um ein drittes Videosignal (26C) zu erzeugen, das Bilder an einem dritten Abschnitt (28C) der Streuvorrichtung (22) anzeigt, wobei die dritte optoelektronische Vorrichtung (24C) eine geringere Auflösung als die erste optoelektronische Vorrichtung (24A) aufweist, sodass das dritte Videosignal (26C) eine schnellere Reaktionszeit als das erste Videosignal (26A) aufweist.

## Revendications

1. Système de capteur optique (10) adaptable à une utilisation sur un véhicule, ledit système (10) comprenant :
une lentille maîtresse (12) positionnable sur le véhicule pour observer un champ de vision (14) autour du véhicule, ladite lentille maîtresse (12) étant **caractérisée en ce qu'**elle définit un plan focal (20) ;
un diffuseur optique (22) situé à proximité du plan focal (20) de la lentille maîtresse (12), ledit diffuseur (22) étant configuré pour afficher une image (16) du champ de vision (14) de la lentille maître (12) ;
**caractérisé en ce que** le système comprend en outre
une pluralité de dispositifs optoélectroniques (24) configurés pour visualiser (14) le diffuseur (22), dans lequel ladite pluralité de dispositifs optoélectroniques (24) inclut un premier dispositif optoélectronique (24A) configuré pour générer un premier signal vidéo (26A) indicatif d'images sur une première partie (28A) du diffuseur (22) et un deuxième dispositif optoélectronique (24B) configuré pour générer un deuxième signal vidéo (26B) indicatif d'images sur une deuxième partie (28B) du diffuseur (22), chaque dispositif optoélectronique (24A, 24B) comprenant un capteur d'image ;
dans lequel le premier dispositif optoélectronique (24A) est configuré pour être sensible à une première plage de longueurs d'onde de lumière et le deuxième dispositif optoélectronique (24B) est configuré pour être sensible à une deuxième plage de longueurs d'onde de lumière distincte de la première plage de longueurs d'onde de lumière.

2. Système (10) selon la revendication 1, dans lequel la première plage de longueurs d'onde de lumière correspond à une plage de longueurs d'onde de lumière visible et la deuxième plage de longueurs d'onde de lumière correspond à une plage de longueurs d'onde de lumière infrarouge.

3. Système (10) selon l'une quelconque des revendications précédentes, dans lequel le premier dispositif optoélectronique (24A) comprend une puce optoélectronique.

4. Système (10) selon l'une quelconque des revendications précédentes, dans lequel le premier signal vidéo (26A) est traité indépendamment du deuxième signal vidéo (26B).

5. Système (10) selon l'une quelconque des revendications précédentes, dans lequel le système (10) comprend en outre un filtre optique interposé entre le premier dispositif optoélectronique (24A) et le diffuseur (22).

6. Système (10) selon l'une quelconque des revendications précédentes, dans lequel le système (10) comprend en outre une couche de projection d'image (34) (IPL (34)) interposée entre le diffuseur (22) et la pluralité de dispositifs optoélectroniques (24), ladite IPL (34) étant configurée pour diriger préférentiellement la lumière du diffuseur (22) vers la pluralité de dispositifs optoélectroniques (24).

7. Système (10) selon la revendication 6, dans lequel l'IPL (34) inclut un réseau lenticulaire (38).

8. Système (10) selon l'une quelconque des revendications 6 à 7, dans lequel l'IPL (34) inclut une lentille à électromouillage (40) pouvant être mise en oeuvre pour diriger la lumière du diffuseur (22) vers chacun de la pluralité de dispositifs optoélectroniques (24).

9. Système (10) selon l'une quelconque des revendications 6 à 8, dans lequel l'IPL (34) inclut un dispositif optique à forme libre (42) qui définit un réseau d'éléments de lentille (44), dans lequel chacun des éléments de lentille (44) est configuré pour diriger préférentiellement la lumière du diffuseur (22) vers chacun de la pluralité de dispositifs optoélectroniques (24).

10. Système (10) selon l'une quelconque des revendications précédentes, dans lequel le système (10) inclut une lentille de correction d'angle (44C) interposée entre le premier dispositif optoélectronique (24A) et le diffuseur (22), ladite lentille de correction d'angle (44C) étant configurée pour corriger un angle de vision (14) du premier dispositif optoélectronique (24A) par rapport au diffuseur (22).

11. Système (10) selon l'une quelconque des revendications précédentes, dans lequel le deuxième dispositif optoélectronique (24B) a une résolution inférieure à celle du premier dispositif optoélectronique (24A), de sorte que le deuxième signal vidéo (26B) a un temps de réponse plus rapide que le premier signal vidéo (26A).

12. Système (10) selon la revendication 11, dans lequel le premier dispositif optoélectronique (24A) est configuré pour être sensible à une première plage de longueurs d'onde de lumière et le deuxième dispositif optoélectronique (24B) est configuré pour être sensible à une deuxième plage de longueurs d'onde de lumière distincte de la première plage de longueurs d'onde de lumière.

13. Système (10) selon l'une quelconque des revendications précédentes, dans lequel le premier dispositif optoélectronique (24A) est configuré pour être sensible à une première plage de longueurs d'onde de lumière et le deuxième dispositif optoélectronique (24B) est configuré pour être sensible à une deuxième plage de longueurs d'onde de lumière distincte de la première plage de longueurs d'onde de lumière, dans lequel le système (10) inclut un troisième dispositif optoélectronique (24C) pouvant fonctionner pour générer un troisième signal vidéo (26C) indicatif d'images sur une troisième partie (28C) du diffuseur (22), dans lequel le troisième dispositif optoélectronique (24C) a une résolution inférieure à celle du premier dispositif optoélectronique (24A), de sorte que le troisième signal vidéo (26C) a un temps de réponse plus rapide que le premier signal vidéo (26A).
